# EUROPEAN PATENT SPECIFICATION

(11) **EP 1 145 485 B1**
(45) Date of publication and mention of the grant of the patent: **17.02.2010**
(21) Application number: 99937656.9
(22) Date of filing: 30.07.1999
(51) Int. Cl.: H04L 9/32, H04L 29/06

(54) **APPARATUS AND METHOD FOR AN AUTHENTICATED ELECTRONIC USERID**
VORRICHTUNG UND VERFAHREN ZUM AUTHENTIFIZIEREN EINER ELEKTRONISCHEN BENUTZERIDENTIFIKATION
APPAREIL ET PROCEDE PERMETTANT D'AUTHENTIFIER L'IDENTIFICATION ELECTRONIQUE D'UN UTILISATEUR

(30) Priority: 14.08.1998 US 133875; 16.04.1999 US 293131
(43) Date of publication of application: 17.10.2001
(73) Proprietor: OMNIPOINT CORPORATION, Bethesda, Maryland 20814 (US)
(72) Inventor: GIBBS, Benjamin, K., Colorado Springs, CO 80920 (US)
(74) Representative: Leeming, John Gerard
(86) International application number: PCT/US1999/017285
(87) International publication number: WO 2000/010288

(56) References cited:
- US-A- 5 754 659
- US-A- 5 867 578
- US-A- 5 892 904
- US-A- 5 943 426

## Description

### Field of the Invention

The present invention relates electronic user identification, and more specifically, to an apparatus and method for creating and verifying an authenticated electronic userid.

### Background

Electronic mail, or "e-mail" has become one of the most popular forms of point-to-point communication for people with access to the Internet. An e-mail system typically comprises a database server, a local area network (LAN) and/or a modem bank, and an internet gateway. A user, who communicates with others via e-mail, is typically given a user identification, or "userid", that permanently and uniquely identifies that user with the database server. The server typically has its own identity too, for example, the server is sometimes referred to as a host and the identity is called a "host name", or in some circles a "domain name." When a user desires to check their e-mail, the user logs onto the e-mail system and e-mail messages are displayed on a terminal device or personal computer. A great advantage of e-mail over traditional mail which accounts, in part, for its surge in popularity, is that messages can be delivered significantly faster, messages can be easily distributed to significantly more recipients, and it is, generally, less expensive for the user than regular mail, or "snail mail."

Junk e-mail or unsolicited bulk e-mail ("UBE"), referred to hereafter as "spam", has become a significant problem. Users of electronic messaging applications are barraged with spam on a daily basis by spammers (those who create and send spam). Spammers usually advertise sham wares, services, pyramid schemes, and, even worse, they send electronic viruses.

Spam has grown in popularity for a number of reasons. Primarily, it is a low cost and fast medium through which messages can be delivered. Further, the ease with which a spammer can harvest e-mail addresses, for example, from joke lists, newsgroups, web pages and cookies, provides a steadily expanding audience to which spam can be directed.

Filters have been proposed and a few developed that attempt to reduce or eliminate spam from a user's mail host and/or e-mail client.

One type of spam filter is a sender filter. The sender filter rejects all messages from an untrusted source, such as by way of an authorized or an unauthorized sender list. Inbound e-mail messages are simply rejected based upon the source of the message (e.g., the"from:" address of a message header). A major problem with the sender filter is that the sender's identity is frequently spoofed as either a random sender (which bypasses the unauthorized sender list) or as a sender unlikely to be rejected (which bypasses the authorized sender list.)

Another example of a spam filter is a context filter. A context filter examines a message body or a message subject header and removes messages based upon key words or phrases a spammer is likely to include in the message (e. g.,"get rich","work from home","call now","porn","xxx", etc.) A problem with context filters is that linguistic rules must be set up for a particular user in a particular environment. Moreover, language or context alone is inherently imprecise. Thus, context type filters generally suffer from an over-inclusiveness problem--meaning they filter more messages than they should because legitimate messages occasionally match the linguistic rules of the context filter.

Still another approach is the use of traditional encryption/decryption technology. Traditional encryption/decryption technology includes the use of shared encryption/decryption algorithms or keys (e. g., asymmetric or symmetric encryption). For example, in an asymmetric encryption/decryption system, a sender encrypts a message body using the intended recipient's public key. The recipient receives the encrypted message and decrypts it using her private key. A problem with this technique is that special equipment is required by both the sender and receiver--such as proprietary software or hardware. In a symmetric encryption solution, a secret key is shared between the sender and recipient. A problem here is that the shared key can easily be compromised. Moreover, encryption/decryption solutions can be computationally expensive and difficult to manage as compared to the low value of most e-mail messages. Some encryption/decryption solutions even require multiple handshaking and/or a realtime connection between the sender and receiver.

Thus, there is a need for a unique method and apparatus for authenticating electronic messages that is capable of controlling UBE and other forms of electronic messages that clutter communication applications such as electronic mail. Moreover, there is a need for a secure and trusted technique for identifying and filtering unauthorized electronic messages.

US Patent 5,892,904 of Atkinson, et al., issued April 6, 1999, regards a system for ensuring the authenticity and integrity of a computer program, in which a publisher or producer may sign an executable file to ensure the recipient of the file regarding the authenticity and integrity of the file. US Patent 5,943,426 of Frith, et al., issued August 24, 1999, regards a method for providing a digital signature to a compressed message. The method includes receiving a digitally signed message, verifying the signature fo the message, compressing the message, and re-signing the message before sending the message. US Patent No. 5,867,578 of Brickell, et al., issued February 2, 1999 regards a multi-step digital signature system that includes a distributed certifying authority with multiple certifying authority members. US Patent 5,574,659 of Sprunk, et al., issued May 19, 1998 addresses a method and apparatus for authenticating information of a plurality of information groups, with the information from each group being hashed to produce a separate hash key for each group, combinations of hash keys being hashed together to produce combined hash keys, and each hash key being combined with all other hash keys in via combined hash keys to produce a digital signature.

According to the present invention, there is provided a method for creating an authenticated electronic userid and an electronic mail system using the method, as defined in the appended claims. According to one embodiment, an electronic message system generates an authenticated electronic userid for a local user that comprises an adapted digital signature. The adapted digital signature, with other identifiers, provides temporary or restricted electronic message privileges to a remote user.

According to one embodiment, the adapted digital signature grants privileges to a particular remote user for access to a single local user on the message system. However, according to another embodiment, the adapted digital signature grants privileges to a number of remote users from a particular host for access to one or more local users on the message system.

In one embodiment, a process for creating an authenticated electronic userid comprises the acts of generating an adapted digital signature based on an originator key and a portion of a remote userid, and concatenating the adapted digital signature with originator information to form the authenticated electronic userid.

In another embodiment, a process for authenticating an adapted digital signature comprises the acts of extracting a local userid and remote user information from an incoming electronic message; comparing the local userid to a list of local users; verifying the adapted digital signature is valid; and then granting access to an electronic service if the adapted digital signature is valid.

According to one embodiment, a method for creating an adapted digital signature comprises: retrieving an originator key, the originator key corresponding to a local userid; running a digital signature engine to create a digital signature, the digital signature based on at least the originator key and remote user information; retrieving a word from a word list, the word indexed to at least a portion of the digital signature; and returning at least the word as the adapted digital signature.

According to another embodiment, a method for verifying an adapted digital signature comprises: retrieving an originator key based on a first portion of address information; generating an adapted digital signature based on the originator key and a second portion of the address information; comparing a third portion of the address information to the adapted digital signature; and accepting the electronic message if the third portion of the address information and the adapted digital signature match.

According to another embodiment, an electronic message system comprises: an authenticated message server configured to remove inbound electronic messages if an authenticated electronic userid cannot be verified; and a mail host coupled to the authenticated message server; and wherein the authenticated message server is configured to remove inbound electronic messages by performing the acts of : generating an adapted digital signature; comparing a portion of an inbound electronic message to the adapted digital signature; and rejecting the inbound electronic message if the portion of the inbound electronic message and the adapted digital signature do not match.

### Brief Description of the Drawings

The present inventions are illustrated by way of example, and not by way of limitation, in the figures of the accompanying drawings in which like reference numerals refer to similar elements and in which:
FIG. 1 is a diagram illustrating one embodiment of an electronic messaging system employing an authenticated message server;
FIG. 2 depicts an alternative embodiment of an electronic messaging system employing an authenticated message server;
FIG. 3 is a functional diagram illustrating one embodiment of an authenticated message server and authenticated electronic userid;
FIG. 4 depicts a functional diagram illustrating of an alternative authenticated message server and authenticated electronic userid;
FIG. 5 is a flowchart depicting the steps of generating an authenticated electronic userid;
FIG. 6 depicts an embodiment of an adapted digital signature technique;
FIG. 7 is a flowchart depicting the steps for verifying an authenticated electronic userid; and
FIG. 8 is a flowchart depicting the steps for verifying an an inbound electronic message comprising an adapted digital signature.

### Detailed Description of the Preferred Embodiments

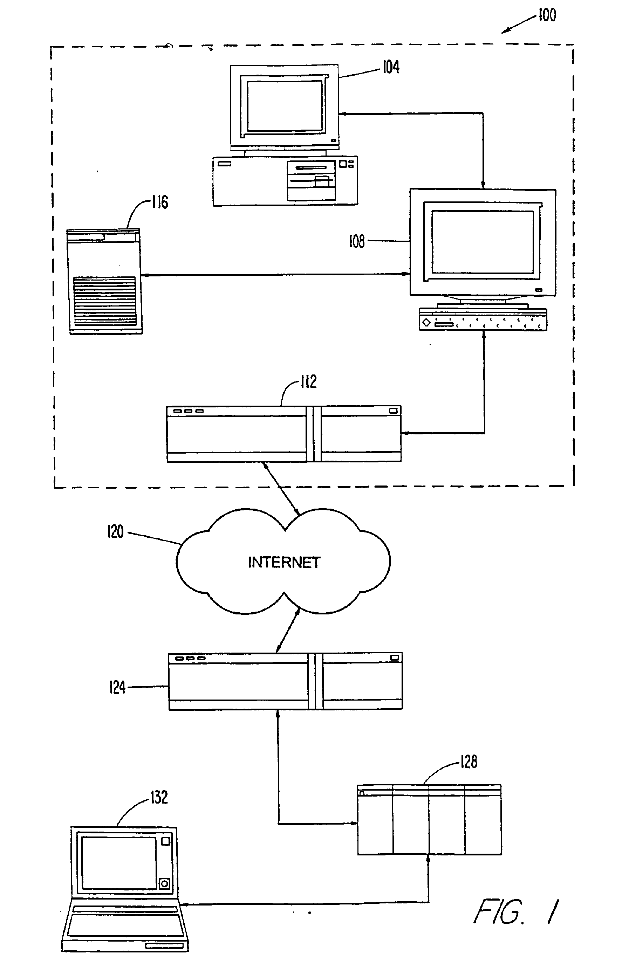

FIG. 1 depicts an electronic messaging system 100 according to one embodiment of the present inventions. System 100 includes a server 108, coupled to a terminal unit or personal computer 104, a router 112, and an authenticated message server 116. The interconnection or coupling mechanism between the various devices is preferably a fiber optic network cable, but it can also be a twisted pair, or a wireless interconnection. According to one embodiment, server 108 is a Sun Microsystems SPARC™ system running electronic message software such as Oracle Corporation's InterOffice™ messaging server. Router 112 is a commercially available internet router such as a Cisco Systems 7500 Series router.

Authenticated message server 116 can run on a standard personal computer, such as an Intel Pentium™ based microprocessor system. However, authenticated message server 116 is alternatively part of the software component stack added to server 108. In such an embodiment, an application programming interface ("API") for the messaging server 108 is added which provides access to the authenticated message server services, such as the methods and techniques for generating and verifying authenticated electronic userids as described herein. In the broader spirit of the inventions, the system can be highly distributed, wherein incoming and outgoing messages are handled by separate servers or computer systems on an interconnected network (e.g. a local area network or "LAN").

From the server 108, outgoing electronic messages to remote users are typically passed through an internet gateway router, such as router 112. Router 112 is preferably connected to the internet 120 via a T1 pipeline, or other leased line. Conversely, messages from the internet 120 to a particular local user associated with the server 108 will be passed through router 112.

A remote user typically resides on a personal computer, such as laptop 132, which is also connected to a server 128. Server 128 is configured similar to server 108, but it can also be a different type of server, such as a Digital Equipment Corporation VAX/VMS™ system. The server 128 is likely to run a different messaging system, such as the University of Washington PINE™ messaging system. Similar to router 112, router 124 is connected to server 128 and the internet 120.

In one embodiment, electronic message system 100 further comprises a wireless short message service ("SMS") system. An e-mail to SMS gateway receives an e-mail message (preferably an authenticated message) from router 112 or authenticated message server 116. The gateway converts the e-mail into one or multiple short messages, typically of 160 characters in length, and forwards the short messages to an SMS center. In turn, the SMS center forwards the message over a wireless link (e.g., a wireless local loop) to a local user (e.g., here, the receiving device can be a pager or a cellular telephone). A wireless short message service system is available from Omnipoint Corporation.

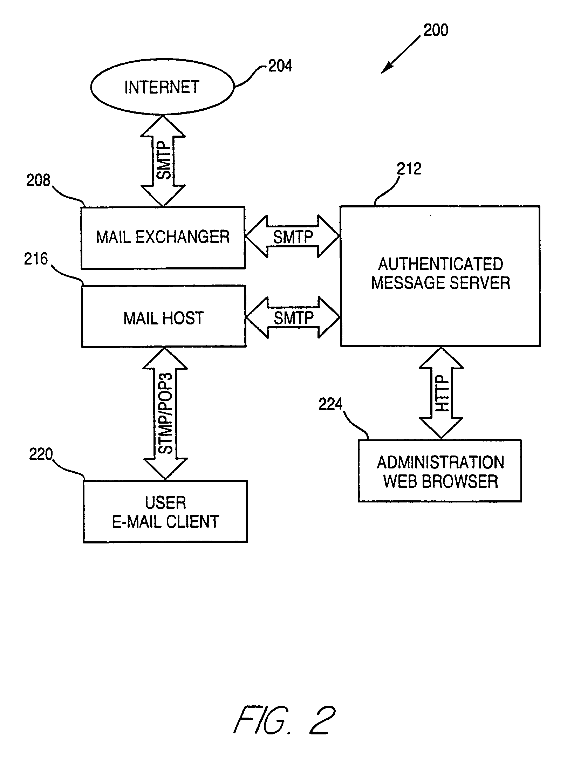

FIG. 2 is an overview of an alternative electronic messaging system 200 employing the inventions described herein. Internet 204 is a wide area network of interconnected computers. Connected to internet 204 via a simple mail transfer protocol ("SMTP") connection is a mail exchanger 208. (SMTP is further described in publicly available Internet RFC 821.) A mail exchanger, as used herein, is a server that transmits and receives electronic messages (e.g., e-mail) via the internet 204. The mail exchanger 208 resides in an internal network (e.g., a local area network). The mail exchanger 208 is the designated sender and receiver of e-mail between the internal network and the internet. For load balancing purposes, more than one mail exchanger 208 may service an internal network. The designation of a mail exchanger, such as mail exchanger 208, is preferably defined by a domain name server ("DNS") in a mail exchange record.

Connected to mail exchange server 208, also via an SMTP, is authenticated message server 212. The authenticated message server 212 is configured to perform functions associated with the generation and authentication of authenticated electronic userids, as is described herein.

Connected to authenticated message server 212 via an SMTP link is a mail host 216. Mail host 216 receives inbound e-mail messages and stores them for reading by a user. Mail host 216 can also send outbound e-mail messages created by the user. Because mail host 216 supports SMTP and post office protocol version 3 ("POP3), it can be embodied in virtually any mail server software, such as Microsoft Exchange Server and Lotus Notes. (POP3 is further described in publicly available Internet RFC 1939.) Thus, mail host 216 supports both inbound and outbound electronic messaging.

Optionally connected to authenticated message server 212 via a hyper text transfer protocol ("HTTP") link is an administration interface 224. (HTTP is further described in publicly available Internet RFC 1945.) An administrator is able to configure the authenticated message server 212 via a web browser or equivalent device through data exchanges via HTTP and the administration interface 224.

Users are able to connect to the mail host 216 via a POP3 or an SMTP connection by way of one or more user e-mail clients 220. Embodiments of e-mail clients include the Netscape Communicator available from Netscape Corporation in Mountain View, California and the Microsoft Outlook client, available from Microsoft Corporation in Redmond, Washington.

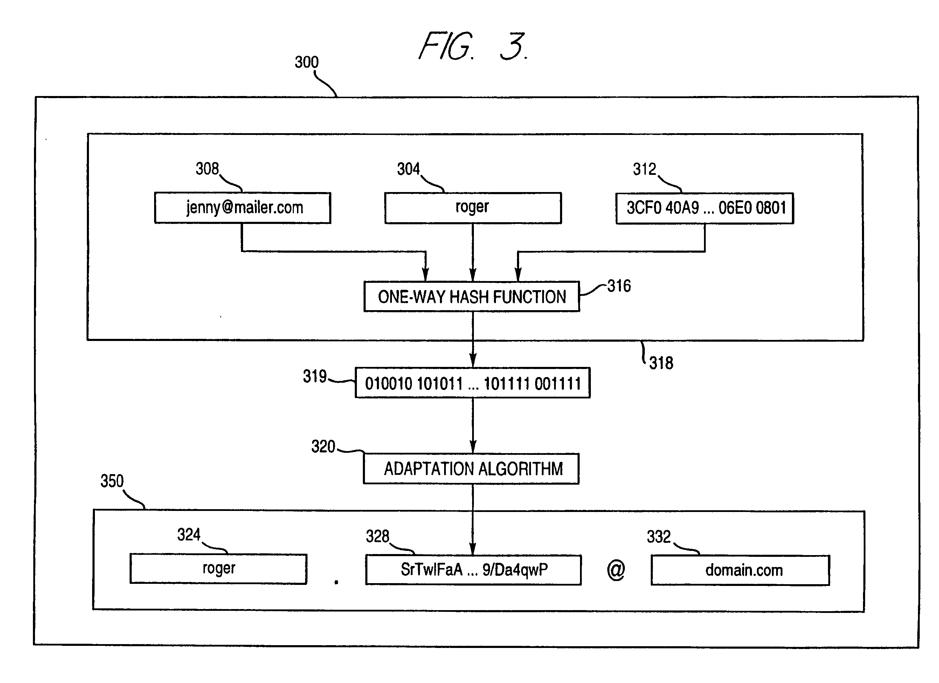

FIG. 3 depicts a functional overview of an authenticated message server 300. According to one embodiment, the authenticated message server 300 comprises a digital signature engine 318 and an adaptation algorithm 320.

According to a presently preferred embodiment, a local user "roger", who is using an electronic message system, such as one running on server 108 (identified by the host or domain name "domain.com"), composes and requests to send a message to a remote user identified as "jenny@mailer.com". When local user "roger" requests to send the message to remote user "jenny@mailer.com", a portion of the message, in particular the remote userid 308 and the originator userid 304, is passed to a digital signature engine 318 for processing. Digital signature engine 318 can also store the local user's (e.g. roger's) private key, depicted in FIG. 3 as originator key 312. Alternatively, the local user's originator key 312 can be sent in addition to or separate from the request by the messaging system residing on server 108. Preferably, originator key 312 is a 256 bit value.

Remote userid 308, originator userid 304 and originator key 312 are passed to one-way hash function 316 in digital signature engine 318. In the present case, remote userid 308 is the value "jenny@mailer.com", originator userid 304 is the value "roger" and originator key 312 is the (partial) originator key for local user "roger", which has a value of "3CF0 40A9 ... 06E0 080116". One-way hash function 316 performs a computational algorithm on inputs 304, 308 and 312 to generate a fix-length array of bits called a hash value, but referred to herein as a "digital signature" 319.

Preferably, the one-way hash function 316 is the Message Digest 5 ("MD5") function. The MD5 function is described in RFC 1321, entitled "The MD5 Message-Digest Algorithm", by R. Rivest and written in 1992. However, in other embodiments, the computation algorithm is an encryption algorithm that produces a variable length digital signature.

An example of an encryption algorithm that will work in the present invention is the data encryption algorithm defined in ANSI document X3.92-1981 (R1987) entitled "Data Encryption Algorithm". Using a data encryption algorithm, the same inputs as were used to produce the hash value are instead encrypted with an authenticated message server public key or a local user's public key. Note that when such an authenticated electronic userid is returned, it can either be decoded with an authenticated message server private key or a local user's private key, or it can be recomputed using the authenticated message server public key or local user's public key.

Once the digital signature 319 is computed, the digital signature 319 is passed on to adaptation algorithm 320. Adaptation algorithm 320 transforms, or maps the digital signature 319 to an acceptable form for transmission in a return e-mail address. Preferably, a base64 conversion is performed by adaptation algorithm 320, whereby the conterminous 6 bit strings of the digital signature are mapped to ASCII characters as follows:

| | |
|---|---|
| 000000-011001 | A - Z |
| 011010- 110011 | a-z |
| 110100 - 111101 | 0 - 9 |
| 111110 | + |
| 111111 | / |

In one embodiment, the output of the adaptation algorithm 320 is an adapted digital signature 328. However, in another embodiment the functionality of the adaptation algorithm 320 is performed by logic circuitry, or it is embedded into the particular computational function (e.g., one-way hash function 316) directly. In still another embodiment, the digital signature 319 does not need to be transformed with a base64 conversion; rather, the messaging system 100 supports binary and other digital formats. However, transforming the digital signature 319 into an adapted digital signature 328 in the form of ASCII characters is preferred, since most legacy systems (e.g., internet e-mail) will generally support the character set. Additionally, the character set is easily replicated on a variety of input devices (e.g., computer keyboards, telephones, etc.) on which the authenticated electronic userid 350 can be typed.

The adapted digital signature 328 will become part of an authenticated electronic userid 350 for the outbound message to the remote user "jenny@mailer.com". Identifiers 324, 328 and 332, together with the other symbols (e.g., a period, an underscore, a hyphen, an ampersand, etc.) are concatenated to form authenticated electronic userid 350. For example, the return address of local user "roger" would appear similar to the address "roger.SrTwIFa9/Da4qwP@domain.com". The authenticated electronic userid 350 will be the return/reply address to local user "roger".

Assuming authorization is otherwise not granted to remote user "jenny@mailer.com", then the only way remote user "jenny@mailer.com" can send an electronic message to local user "roger" is with a message addressed to the authenticated electronic userid 350. Since local user "roger" controls whether remote user "jenny@mailer.com" will receive an authenticated electronic userid 350 with which to send him an electronic message, unsolicited electronic messages and/or unsolicited bulk e-mail from remote user "jenny@mailer.com" should not occur.

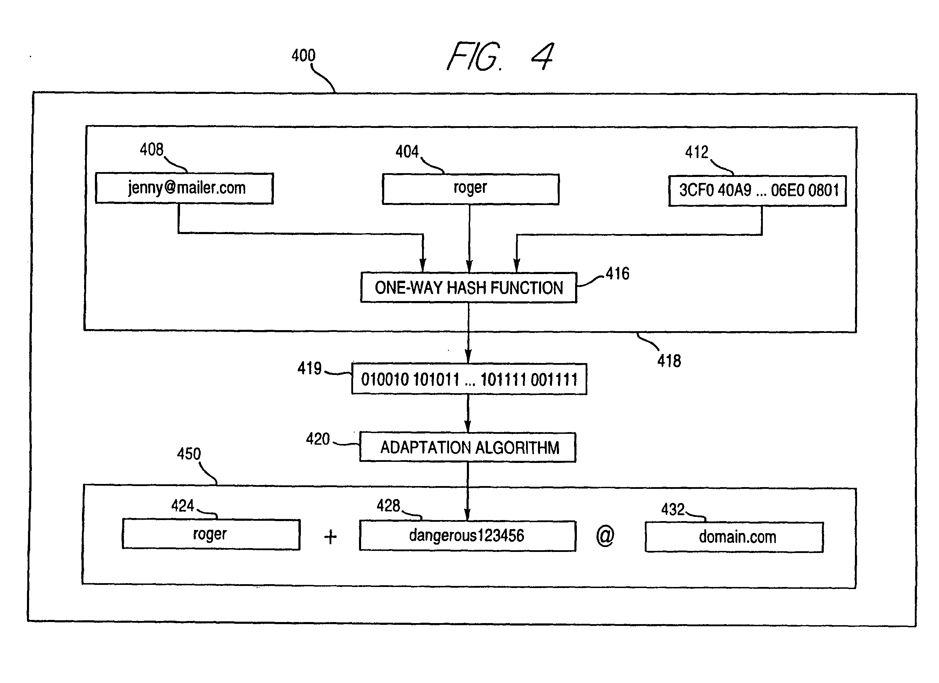

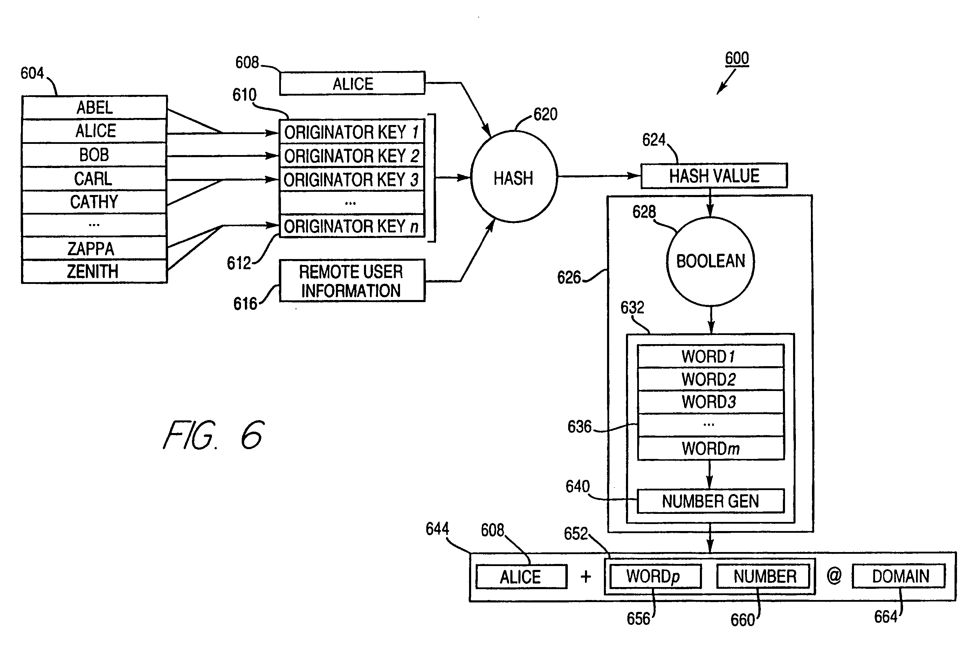

FIG. 4 depicts a slightly modified functional overview of authenticated message server 300-here identified as authenticated message server 400. Again, the digital signature engine 418 is preferably embodied in the authenticated message server 400. It is noted that the adaptation algorithm 420 is different than the adaptation algorithm 320 shown in FIG. 3. An improvement in the adaptation algorithm is described below with reference to FIG. 6. Moreover, the authenticated electronic userid 450 is different from authenticated electronic userid 350. Modifications include the use of a plus sign "+" delineator rather than a period between the local userid 424 and the adapted digital signature 428. Significantly, the adapted digital signature 428 is no longer an unrememberable value, but rather a rememberable value.

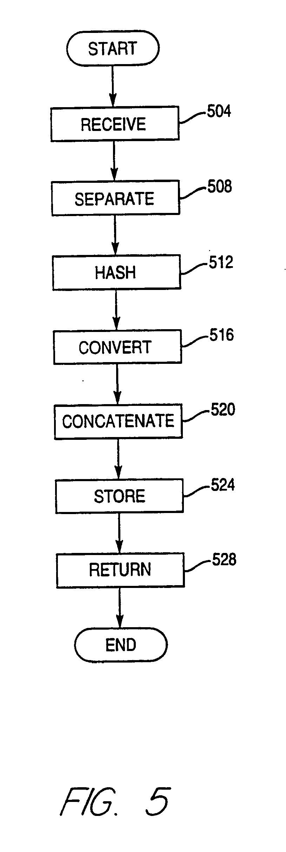

Turning now to FIG. 5, it depicts a flowchart of the process of generating the authenticated electronic userid 350 shown in FIG. 3. In step 504, a request for an authenticated electronic userid 350 is received by the authenticated message server 116. According to one embodiment, an outbound message, which comprises the request, is separated in step 508 and data from the "to:" and "from:" fields is extracted. Additionally, the originator key 312 is also separated, if it is included with the message, or it can be stored and retrieved from a table which is part of the authenticated message server 116.

According to one embodiment, the outbound message also comprises preprocessing security level field that identifies a level of security the message is to receive. For example, a "0" security level indicates no authenticated electronic userid is required for the message, where as a "1" indicates that the authenticated electronic userid is good for any person at the host or domain name of the remote user or message recipient. A "2" indicates that the authenticated electronic userid is good only for the remote user or message recipient, and a "3" indicates that the electronic userid is good only for a preset period of time (e.g., 24 hours) for a particular remote user. In one embodiment of an authenticated electronic userid, the value in the security level field is retained as a portion of the adapted digital signature 228. Various levels and techniques for identifying the security level of the authenticated electronic userid can be used.

Data extracted in the separating step 508, together with the originator key 312 are hashed by the one-way hash function 316 in step 512, preferably using an MD5 hash function, to generate the digital signature 319. After step 512, the digital signature 319 is converted at step 516 using a base64 conversion algorithm. The output of the base64 conversion algorithm is the adapted digital signature 328. The adapted digital signature 328 will, in part, grant the remote user "jenny@mailer.com" privilege to reply or send a message to local user "roger".

In step 520, the output of the adaptation algorithm 320, that is, adapted digital signature 328, the originator identifier 324 and the originator's host or domain name 332 are concatenated as a single authenticated electronic userid (e.g. userid 350). According to one embodiment, the result is stored in an authentication log file that can be indexed and/or searched for matching strings and/or authorization levels in the future. The advantage of such a system is that the authenticated message server 116 can track and record incoming and outgoing messages and privileges so that security breaches can be tracked and examined by an administrator.

In step 528, the authenticated electronic userid 350 is returned to the message server (e.g. server 108). According to one embodiment the process is repeated for the remote user specified in the "cc:" field. When the message server (e.g. 108) spools out messages to the other remote users, the "from:" field will now contain a unique authenticated electronic userid for each of the other users as well. However, in another embodiment the identity of other remote users identified in the "to:" and "cc:" fields are recorded in an authentication log file so they can be matched with the appropriate inputs used when the authenticated electronic userid 350 was created.

In another embodiment, the authenticated message server 116 supports explicit requests for an authenticated electronic userid 350 without the need for sending a message through the message server (e.g. server 108). Such a system can be employed where a local user specifically requests an authenticated electronic userid 350 or desires to give such a userid to a remote user, organization or internet application (e.g., a distribution list.) Instead of spooling out a message with the authenticated electronic userid 350, the authenticated message server 116 will return the authenticated electronic userid 350 directly to the local user.

FIG. 6 depicts an alternative embodiment of the adaptation algorithm 420 shown in FIG. 4 or also adaptation algorithm 320 shown in FIG. 3. A local userid list 604 is shown to illustrate the relationship between local userids and originator keys - shown in originator key list 612.

According to a presently preferred embodiment, thirty-seven originator keys are used, each originator key having a one-to-many relationship with local userids 604. The first character of local userids 604 determines which originator key is associated with it. Twenty-six keys are reserved for letters A-Z (case insensitive), ten for numbers 0-9, and a miscellaneous key for characters not matching the first thirty-six values. According to an alternative embodiment, any number of originator keys, n, can be used. In yet another embodiment, a database can be maintained by the mail host 216 or the authenticated message server 212 that identifies local userids and their preferences (e.g., always reject messages having an invalid adapted digital signature). If each local userid is allowed one or more originator keys, then the database can store them.

Digital signature engine 418, shown as hash function 620 (preferably the MD5 function), combines a local userid 608, "Alice", with Alice's corresponding originator key 610 and remote user information 616. Remote user information includes at least a domain name and can also include the remote userid. The output of the digital signature engine 418 (shown here hash function 620) is a digital signature (or "hash value" 624, as the case may be). The digital signature is preferably a 128-bit value. The adaptation algorithm 626 then modifies the digital signature.

Adaptation algorithm 626 first performs a boolean function 628 on the hash value 624. The extent to which the hash value 624 is modified depends on the size of a word list 636. According to a presently preferred embodiment, the word list is 4096 words long (as used herein, "words" does not refer to a length of a value, rather it refers to the value itself - a word in the word list can be virtually any length), however, the word list 636 can be any length, m, depending on the degree of security desired (the more words, the greater the security). Since 4096 words are in the word list, the extent of the modification is such that it yields a value that is equal to or greater than the number of words, m, in the word list 636. The boolean function 628 modifies the hash value 624 into a 12-bit value referred to herein as a "modified digital signature", or more specifically a "modified hash value". In one embodiment, the boolean function 628 selects the first twelve bits as the modified hash value. In another embodiment, AND or OR functions can combine one or more preset bit masks to generate the modified hash value.

The modified hash value from the boolean function 628 is passed to the adapted digital signature selector 632. The adapted digital signature selector 632 includes the word list 636 and, optionally, a number generator 640. The adapted digital signature selector 632 selects a particular word from the word list 636 using the modified hash value from the boolean function 628.

According to one embodiment, a modulus function (e.g., the C language modf function or % operator) is applied to the modified hash value, the base being the number of words, m, in the word list 636. If the modulus function returns zero, then the adapted digital signature selector 632 retrieves a word corresponding to (i.e., indexed to) the modified hash value. However, if the modulus function returns a value other than zero, then the adapted digital signature selector 632 retrieves a word corresponding to the value returned by the modulus function (e.g., the remainder).

For example, if the modified hash value is 3 and there are 5 words in the word list 636, then word3 is the word selected from the word list 636. However, if the modified hash value is 7 and there are 5 words in the word list 636, then word2 is the word selected from the word list 636.

The number generator 640 generates a calculated number, a preset number (e.g., identifying a status or mode for the adapted digital signature 652), or any combination thereof. Preferably, the number generator 640 generates a number based on the remaining 116 bits from the digital signature (or hash value 624). According to one embodiment, a six digit ASCII number is generated. The first digit corresponds to the mode of the adapted digital signature (e.g., which set of remote user information was used as an input to the digital signature engine 418 - the remote user domain name, or the remote userid and domain name). The subsequent five digits are based upon a bit pattern of the unused portion of the hash value 624. For example, sixteen bits of the 116 bits can be selected and a combination of those sixteen bits can be turned into the five digit number.

The value 660 generated by the number generator 640 is appended to the word 656 selected from the word list 636 to form the adapted digital signature 652. The adapted digital signature 652 is concatenated with a local userid 608 and a domain name 664 to form the authenticated electronic userid 644. A delineator (e.g., "+") separates the local userid 608 from the adapted digital signature 652, while the at sign ("@") separates the adapted digital signature 652 from the domain name 664. Of course, other delineators, such as the minus sign ("-"), the underscore ("_"), the period ("."), the equal sign ("=") or fixed length values can be used to delineate the address information.

If added security is desired, then the word list 636 can be bit-wise barrel-shifted or otherwise scrambled so that the values in the word list 636 cannot be casually copied. Accordingly, the scrambled value can be converted by the adaptation algorithm 626 when the word is needed, or just before concatenation of the adapted digital signature 652 to form the authenticated electronic userid 644.

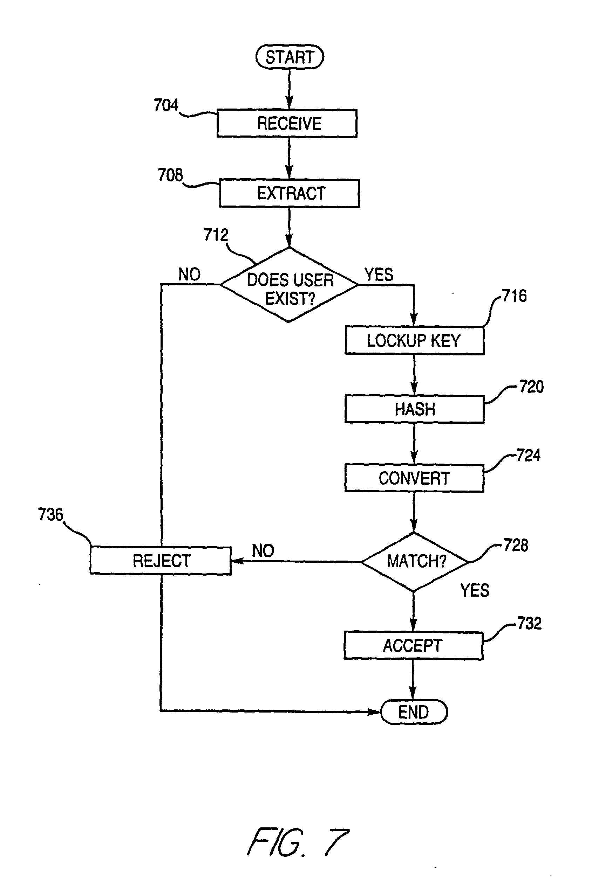

FIG. 7 is a flowchart depicting the steps for verifying an authenticated electronic userid 350 based on a message from a remote user. In step 704, an inbound message is passed from router 112 (FIG. 1) to server 108 and is then received by authenticated message server 116. In step 708, header information, also known as envelope information, is separated from the inbound message, and in particular the remote user's domain name, the remote userid and the authenticated electronic userid 350 are extracted. Referring to FIG. 3, the left side of inbound authenticated electronic userid 350, specifically originator identifier 324 (e.g., "roger"), is tested in step 712 to confirm that the user is a valid local user on the messaging system 108. If the originator identifier 324 does not identify a valid local user, then the authenticated message server 116 processing continues to step 736, which is explained in further detail below. If the identifier 324 contains a valid local user, then the process continues to step 716.

In step 716, the authenticated message server 116 performs a lookup on the originator key (e.g., key 312) related to the local user "roger". Next, in step 720, a hash (or alternatively a data encryption algorithm) is performed on the local user's originator key 312, in combination with the remote user name (e.g., "jenny@mailer.com") 308 by the digital signature engine 318. In step 724, the digital signature 319 returned by the digital signature engine 318, at step 720, is converted to ASCII characters by adaptation algorithm 320. The result of the conversion (the adapted digital signature 328) is compared with the adapted digital signature of the inbound message (that is, the portion of the authenticated electronic userid 350 between the "." (period) and the "@" (at symbol)) in step 728. If a match is confirmed, then the authenticated message server 116 continues to step 732, where the inbound message is accepted and passed on to the message server 108. From here, the process terminates, since the local user "roger" can retrieve the message from the message server 108.

However, if a match is not verified in step 728, or if the local user does not exist (step 712), then the message is rejected at step 736. According to one embodiment, the remote sender is notified of the rejection and the process ends. However, if tracking is desired, then information about the inbound message (i.e., remote userid, remote host, date, time, etc.) is recorded in a failure log file for examination by a system administrator at a later time.

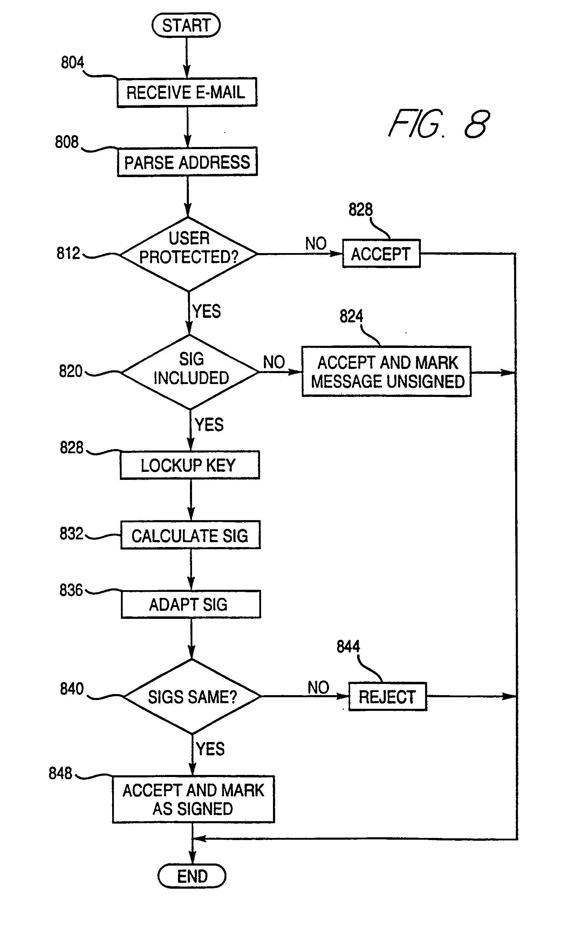

FIG. 8 depicts an alternative method for processing an inbound electronic message comprising an adapted digital signature 652.

In act 804, an inbound electronic message is received over the internet 204 at the mail exchanger 208. According to one embodiment, the inbound electronic message comprises message header information, such as an SMTP "MAIL From" address and an SMTP "RCPT To" address. In act 808, authenticated message server 212 parses the "to:" field ("receiver" information) from the address information (e.g., the "RCPT To" information in the SMTP message) to identify a local userid and, possibly, an adapted digital signature. The "from:" field ("remote user" or "sender" information) can also be parsed in act 808. Next, in act 812, a test is performed on the receiver information to determine whether an associated local userid is protected by the authenticated message server 212. If the associated local userid is not protected, then in act 816, the message is accepted and passed on to the mail host 216. If the associated userid is protected, then processing continues to act 820.

In act 820, the authenticated message server 212 tests the receiver information parsed in act 808 to determine whether the receiver information comprises an adapted digital signature 652. If the receiver information does not include an adapted digital signature 652, then in act 824 the message is conditionally accepted but marked as unsigned. In one embodiment, if a local user or the administrator has configured the authenticated message server 212 to reject all unsigned messages, then a receipt log record can be made recording the message header information and the message can then be purged. However, in another embodiment, the administrator, or the local user, may specify that unsigned messages must be queued to a particular location for later manual review. If the receiver information does include an adapted digital signature 652 then processing continues to act 828.

In act 828, a key lookup is performed. According to one embodiment, a key lookup includes matching a local userid (e.g., from the local userid list 604) with the local userid in the authenticated electronic userid (that is, the portion of the userid before the "+") and then retrieving the corresponding originator key from the originator key list 612. In act 832, the remote user information 616, together with the retrieved originator key (e.g., originator key 610) and the local userid 608 are used to calculate a hash value 624 with the hash function 620.

It is important to note that if mode information is contained with the inbound adapted digital signature, then the particular remote user information used by the hash function 620 can vary. Thus, according to one embodiment, the first digit of the number 660 will determine which remote user information to include as an input to the hash function 620.

In act 836, the adaptation algorithm 626 adapts the hash value 624 to form an adapted digital signature 652 (e.g., the word 656 and number 660). In act 840, the newly created adapted digital signature is compared with the adapted digital signature in the inbound e-mail message receiver information. If the two adapted digital signatures match, then processing continues to act 848. However, if the two adapted digital signatures do not match, then the inbound e-mail message is rejected by the authenticated message server 212.

In act 848, the inbound e-mail message is accepted by the authenticated message server 212 and marked as signed. Once the inbound e-mail message is marked as signed, it can be passed to the mail host 216 for access by the user e-mail client 220.

According to one embodiment, the word list 636 is not configurable after set up of the authenticated message server 212. Rather, the word list 636 is must be modified prior to initialization of the authenticated message server 212. However, if a post set up modifiable word list is desired, then a substitution list can be maintained. According to one embodiment, the substitution list is a two field, multi-row table configured to hold a first word and a second word in each row. A removed word field (column) holds the word that was removed from the word list 636 and a new word field (column) holds the new word substituted for the replaced word.

Thus, when an inbound e-mail message is received at the authenticated message server 212 the authentication process can further involve testing the substitution list to determine whether the word 656 in the adapted digital signature 652 is a word in the removed word field of the substitution list. If the word 656 is in the removed word field of the substitution list, then when the adaptation algorithm is performed the word selected by the adapted digital signature selector 632 from the word list 636 is matched with a word in the new word field in the substitution list. The word selected by the adapted digital signature selector 632 from the word list 636 is then replaced with the word in the replaced word field of the substitution list.

According to one embodiment of the invention, the electronic message body is not accepted via the SMTP process unless the authenticated message server 212 verifies the adapted digital signature. Such an embodiment saves bandwidth. However, according to an alternative embodiment, the authenticated message server 212 verifies the adapted digital signature after the message body is (conditionally) accepted.

In still another embodiment, the functionality of the mail exchanger 208 can be incorporated into the authenticated message server 212.

According to one embodiment, the steps for generating and verifying an authenticated electronic userid are performed by a computer program functioning as a stand-alone server, or in an add-on software component in a message server. In one embodiment, the instructions for performing the methods and techniques described herein (the computer program) are stored on a computer readable medium, such as an electromagnetic storage device (e. g., a floppy disk, a magnetic tape, a hard-disk drive, or other persistent memory device), or an optical data storage medium (e. g., a CD-ROM). Generally, prior to execution of the sequences of instructions, the sequences of instructions are copied from a non-volatile computer readable medium (e. g., the hard-disk drive) to a volatile source (e. g., random access memory) and are executed from the volatile computer readable medium. For purposes of explanation, the methods and techniques described herein were described with reference to an authenticated message server. Where the actual functionality is performed, that is on which piece of hardware, is not important for purposes of this description. For example, server 108 can be configured to perform the functionality of both a message server and an authenticated message server.

The present inventions are particularly useful as a spam (or junk e-mail) filter. Advantages of the present invention include that it integrates into existing electronic messaging infrastructure (e. g., SMTP and POP3 systems) without requiring additional hardware or software by both the sender and receiver. There is no need to share proprietary encryption/decryption algorithms or keys between a message sender and recipient as in traditional symmetric or asymmetric encryption algorithms. Further, it greatly reduces the chance of spoofing by a spammer by verifying the recipient information without requiring a handshake or real-time connection between a sender and a recipient. Finally, the present invention does not rely on complicated linguistic or contentbased rules for filtering spam. Rather, the invention can be realized without reference to the content of the inbound message body.

In the foregoing specification, the inventions have been described with reference to specific embodiments thereof. It will be evident, however, that various modifications and changes can be made thereto without departing from the scope of the invention which is defined by the appended claims. For example, larger or smaller originator keys (e. g., 48 or 128 bit originator keys) can be used. Further, the adapted digital signature can be truncated in order to not exceed the boundaries of the address field in an electronic message. Further still the authenticated message server functionality can be incorporated into the message server (e. g. server 108) rather than in a stand-alone device. In still another embodiment, part of the authenticated message server functionality (e. g., generating an authenticated electronic userid) can be performed in a client application running on the local user's computer, rather than passing the function on to the message server or authenticated message server.In yet another embodiment, the authenticated electronic userid is created by a smartcard coupled to the local user's computer, or a smartcard connected to a user's wireless telephone. The specification and drawings are, accordingly, to be regarded in an illustrative, rather than a restrictive sense.

## Claims

1. A method for creating an authenticated electronic userid (644) for use in authenticating electronic mail from a remote user to a local user, the method comprising:
receiving a request for said authenticated electronic userid (644) from a local message server (108);
retrieving an originator key (610), said originator key (610) corresponding to a local userid (608);
generating a digital signature (624), based on said originator key (610), said local userid (608) and remote user information (616);
generating an adapted digital signature (652) by transforming or mapping the digital signature (624) into an acceptable form for transmission in a return email address;
concatenating said adapted digital signature (652) with at least an originator identifier corresponding to said local userid (608); and
returning a result of said act of concatenating as said authenticated electronic userid (644) to said local message server (108) for use in providing a message to the remote user.

2. The method of claim 1, wherein said act of concatenating comprises concatenating said adapted digital signature (652) with said originator identifier (608) and a domain name (664).

3. The method of claim 1, wherein said act of generating said adapted digital signature (652) comprises:
performing a one-way hash function, using said originator key (610), said local userid (608), and said remote user information (616) as inputs, to form a digital signature (624); and
converting said digital signature (624) from a first digital format into a second digital format, said digital signature in said second digital format being said adapted digital signature (652).

4. The method of claim 1, wherein said act of generating said adapted digital signature (652) comprises:
performing an encryption function using said originator key (610), said local userid (608), and said remote user information (616) to form a digital signature (624); and
converting said digital signature (624) from a first digital formal into a second digital format, said digital signature in said second digital format being said adapted digital signature (652).

5. The method of claim 1, wherein said step of generating said adapted digital signature (652) comprises:
creating a digital signature (624), said digital signature (624) based on at least said originator key (610), said local userid (608), and remote user information (616);
retrieving a word (656) from a word list (636), said word (656) corresponding to at least a portion of said digital signature (624); and
returning at least said word (656) as said adapted digital signature (652).

6. The method of claim 5, further comprising performing a boolean operation (628) on said digital signature (624) to create a modified digital signature, and wherein said word (656) is retrieved based upon said modified digital signature.

7. The method of claim 5, further comprising:
generating a number (660); and
appending said number (660) to said word (656) to form said adapted digital signature (652).

8. A method for filtering electronic mail, comprising:
creating an authenticated electronic userid (644) according to the method of claim 1;
receiving an electronic message from a remote user, said electronic message addressed to the authenticated electronic userid (644);
generating an adapted digital signature (652) based on information from said electronic message, said act of generating comprising:
performing a one way hash function that uses a local userid (608), remote user information (616), and an originator key (610) to form a digital signature (624), and wherein said local userid (608) corresponds to an originator identifier (608) from said electronic message;
transforming said digital signature (624) from a first digital format to a second digital format; and
returning said digital signature in said second digital format as said adapted digital signature (652);
comparing said adapted digital signature (652) to a portion of said electronic message;
accepting said electronic message if said adapted digital signature (652) and said portion of said electronic message match; and
rejecting said electronic message if said adapted digital signature (652) and said portion of said electronic message do not match.

9. The method or claim 8, wherein said electronic message is a reply to a first electronic message sent from a local user, said first electronic message comprising said originator identifier (608) and said adapted digital signature (652), and wherein said portion of said electronic message compared to said adapted digital signature (652) is generated by acts associated with said local user.

10. The method of claim 8, wherein said step of transforming said digital signature (624) from said first digital format to said second digital format comprises:
retrieving a word (656) from a word list (636), said word (656) corresponding to at least a portion of said digital signature (624) in said first digital format; and
returning at least said word (656) as said digital signature (624) in said second digital format.

11. The method of claim 10, further comprising performing a boolean operation (628) on said digital signature (624) to create a modified digital signature, and wherein said word (656) is retrieved based upon said modified digital signature.

12. The method of claim 14, further comprising:
generating a number (660); and
appending said number (660) to said word (656) to form said first or said second adapted digital signature (652).

13. The method of claim 8, further comprising:
testing to determine whether a local user (608) corresponding to said electronic message employs authenticated message server services; and
accepting said electronic message if said local user (608) does not employ said authenticated message server services.

14. A program comprising one or more sequences of instructions configured to cause one or more processors to perform a method according to any one of the preceding claims.

15. An electric message system (200) comprising:
an authenticated message server (212), said authenticated message server (212) configured to filter an inbound electronic message if an authenticated electronic userid (644) cannot be verified, said inbound electronic message including address information; and
a mail host (212) coupled to said authenticated message server (212);
wherein said authenticated message server (212) comprises:
means for generating an adapted digital signature (652), said means for generating comprising:
means for creating a digital signature (624) based on at least an originator key (610) and a first portion of said address information;
means for retrieving a word (656) from a word list (636), said word (656) corresponding to said digital signature (624); and
means for returning said word (656) as at least a portion of said adapted digital signature (652);
means for comparing a second portion of address information to said adapted digital signature (652); and
means for rejecting said inbound electronic message if said second portion of said address information and said adapted digital signature (652) do not match.

16. An electronic message system (200) according to claim 15, wherein said authenticated message server (212) further comprises means for parsing sender information and receiver information from said address information, said receiver information including an originator identifier (608), a second adapted digital signature (652), and said sender information including remote user information (616).

17. An electronic message system (200) according to claim 15, wherein said means for creating said digital signature (624) includes means for executing a one-way hash function (620), said one-way hash function (620) using at least said originator key (610) and a portion of said address information, said one-way hash function (620) generating a hash value, and said hash value being said digital signature (624).

18. An electronic message system according to claim 15, wherein said means for generating said adapted digital signature (652) further comprises means for performing a boolean function (628) on said digital signature (624) to create a modified digital signature, and wherein said word (656) is retrieved based on said modified digital signature.

19. An electronic message system (200) according to claim 15, wherein said authenticated message server (212) further comprises:
means for generating a number (660); and
means for appending said number (660) to said word (656) to form said adapted digital signature (652).

## Patentansprüche

1. Verfahren zum Erstellen einer authentifizierten elektronischen Benutzeridentifikation (644) zur Verwendung beim Authentifizieren von elektronischer Post von einem entfernten Benutzer an einen lokalen Benutzer, wobei das Verfahren umfasst:
- Empfangen einer Anfrage nach der authentifizierten elektronischen Benutzeridentifikation (644) von einem lokalen Nachrichtenserver (108);
- Abrufen eines Absenderschlüssels (610), wobei der Absenderschlüssel (610) mit einer lokalen Benutzeridentifikation (608) korrespondiert;
- Erzeugen einer digitalen Signatur (624), basierend auf dem Absenderschlüssel (610), der lokalen Benutzeridentifikation (608) und einer Information betreffend den entfernten Benutzer (616);
- Erzeugen einer angepassten digitalen Signatur (652) durch Transformieren oder Abbilden der digitalen Signatur (624) in eine akzeptable Form zur Übertragung in eine Antwortadresse für elektronische Post;
- Konkatenieren der angepassten digitalen Signatur (652) mit zumindest einer Absenderidentifikation, welche mit der lokale Benutzeridentifikation (608) korrespondiert; und
- Zurückgeben eines Ergebnisses der Konkatenation als die authentifizierte elektronische Benutzeridentifikation (644) an den lokalen Nachrichtenserver (108) zur Verwendung beim Erstellen einer Nachricht an den entfernten Benutzer.

2. Verfahren nach Anspruch 1, wobei die Konkatenation ein Konkatenieren der angepassten digitalen Signatur (652) mit der Absenderidentifikation (608) und einem Domainnamen (664) umfasst.

3. Verfahren nach Anspruch 1, wobei das Erzeugen der angepassten digitalen Signatur umfasst:
- Durchführen einer Einweg-Hashfunktion, wobei der Absenderschlüssel (610), die lokale Benutzeridentifikation (608) und die Information betreffend den entfernten Benutzer (616) als Eingaben verwendet werden, um eine digitale Signatur (624) zu bilden; und
- Konvertieren der digitalen Signatur (624) von einem ersten digitalen Format in ein zweites digitales Format, wobei die digitale Signatur in dem zweiten digitalen Format die angepasste digitale Signatur (652) darstellt.

4. Verfahren nach Anspruch 1, wobei das Erzeugen der angepassten digitalen Signatur umfasst:
- Durchführen einer Verschtüssetungsfünktion unter Verwendung des Absenderschlüssels (610), der lokalen Benutzeridentifikation (608) und der Information betreffend den entfernten Benutzer (616), um eine digitale Signatur (624) zu bilden; und
- Konvertieren der digitalen Signatur (624) von einem ersten digitalen Format in ein zweites digitales Format, wobei die digitale Signatur in dem zweiten digitalen Format die angepasste digitale Signatur (652) darstellt.

5. Verfahren nach Anspruch 1, wobei der Schritt des Erzeugens der angepassten digitalen Signatur (652) umfasst:
- Erstellen einer digitalen Signatur (624), wobei die digitale Signatur (624) zumindest auf dem Absenderschlüssel (610), der lokalen Benutzeridentifikation (608) und der Information betreffend den entfernten Benutzer (616) basiert;
- Abrufen eines Wortes (656) von einer Wortliste (636), wobei das Wort (656) mit zumindest einem Anteil der digitalen Signatur (624) korrespondiert; und
- Zurückgeben zumindest des Wortes (656) als die angepasste digitale Signatur (652).

6. Verfahren nach Anspruch 5, weiterhin umfassend ein Durchführen einer Booleschen Operation (628) auf der digitalen Signatur (624), um eine modifizierte digitale Signatur zu erstellen, und wobei das Wort (656) basierend auf der modifizierten digitalen Signatur abgerufen wird.

7. Verfahren nach Anspruch 5, weiterhin umfassend:
- Erzeugen einer Zahl (660); und
- Anhängen der Zahl (660) an das Wort (656), um die angepasste digitale Signatur (652) zu bilden.

8. Verfahren zum Filtern von elektronischer Post, umfassend:
- Erstellen einer authentifizierten elektronischen Benutzeridentifikation (644) gemäß dem Verfahren nach Anspruch 1;
- Empfangen einer elektronischen Nachricht von einem entfernten Benutzer, wobei die elektronische Nachricht an die authentifizierte elektronische Benutzeridentifikation (644) adressiert ist;
- Erzeugen einer angepassten digitalen Signatur (652) basierend auf Information aus der elektronischen Nachricht, wobei das Erzeugen umfasst:
- Durchführen einer Einweg-Hashfunktion, welche eine lokale Benutzeridentifikation (608), eine Information betreffend einen entfernten Benutzer (616) und einen Absenderschlüssel (610) verwendet, um eine digitale Signatur (624) zu bilden, und wobei die lokale Benutzeridentifikation (608) mit einer Absenderidentifikation (608) der elektronischen Nachricht korrespondiert;
- Transformieren der digitalen Signatur (624) von einem ersten digitalen Format in ein zweites digitales Format; und
- Zurückgeben der digitalen Signatur in den zweiten digitalen Format als die angepasste digitale Signatur (652);
- Vergleichen der angepassten digitalen Signatur (652) mit einem Anteil der elektronischen Nachricht;
- Akzeptieren der elektronischen Nachricht, wenn die angepasste digitale Signatur (652) und der Anteil der elektronischen Nachricht zusammenpassen; und
- Zurückweisen der elektronischen Nachricht, wenn die angepasste digitale Signatur (652) und der Anteil der elektronischen Nachricht nicht zusammenpassen.

9. Verfahren nach Anspruch 8, wobei die elektronischen Nachricht eine Antwort auf eine von einem lokalen Benutzer gesendete erste elektronische Nachricht ist, wobei erste elektronischen Nachricht die Absenderidentifikation (608) und die angepasste digitale Signatur (652) umfasst, und wobei der Anteil der elektronischen Nachricht, welcher mit der angepassten digitalen Signatur (652) verglichen wird, durch mit dem lokalen Benutzer verbundene Handlungen erzeugt wird.

10. Verfahren nach Anspruch 8, wobei der Schritt des Transformierens der digitalen Signatur (624) von dem ersten digitalen Format in das zweite digitale Format umfasst:
- Abrufen eines Wortes (656) von einer Wortliste (636), wobei das Wort (656) mit zumindest einem Anteil der digitalen Signatur (624) in dem ersten digitalen Format korrespondiert; und
- Zurückgeben zumindest des Wortes (656) als die digitale Signatur (624) in dem zweiten digitalen Format.

11. Verfahren nach Anspruch 10, weiterhin umfassend ein Durchführen einer Booleschen Operation (628) auf der digitalen Signatur (624), um eine modifizierte digitale Signatur zu erstellen, und wobei das Wort (656) basierend auf der modifizierten digitalen Signatur abgerufen wird.

12. Verfahren nach Anspruch 10, weiterhin umfassend:
- Erzeugen einer Zahl (660); und
- Anhängen der Zahl (660) an das Wort (656), um die erste oder die zweite angepasste digitale Signatur (652) zu bilden.

13. Verfahren nach Anspruch 8, weiterhin umfassend:
- Prüfen um Festzustellen, ob ein lokaler Benutzer (608), auf welchen sich die elektronische Nachricht bezieht, Dienste eines authentifizierten Nachrichtenservers verwendet; und
- Akzeptieren der elektronischen Nachricht, wenn der lokale Benutzer (608) die Dienste des authentifizierten Nachrichtenservers nicht verwendet.

14. Programm, umfassend ein oder mehrere Folgen von Instruktionen, welche eingerichtet sind, einen oder mehrere Prozessoren zu veranlassen, ein Verfahren nach einem der vorhergehenden Ansprüche auszuführen.

15. Elektrisches Nachrichtensystem (200), umfassend:
- einen authentifizierten Nachrichtenserver (212), wobei der der authentifizierte Nachrichtenserver (212) eingerichtet ist, eine eingehende elektronische Nachricht zu filtern, wenn eine authentiflzierte elektronischen Benutzeridentifikation (644) nicht verifizierte werden kann, wobei die eingehende elektronische Nachricht eine Adressinformation umfasst; und
- einen Postzentralrechner (212), welcher mit den authentifizierten Nachrichtenserver (212) verbunden ist, wobei der authentifizierte Nachrichtenserver (212) umfasst:
- Einrichtung zum Erzeugen einer angepassten digitalen Signatur (652), wobei die Einrichtung zum Erzeugen umfasst:
- Einrichtung zum Erstellen einer digitalen Signatur (624) basierend auf zumindest einem Absenderschlüssel (610) und einem ersten Anteil der Adressinformation;
- Einrichtung zum Abrufen eines Worts (656) aus einer Wortliste (636), wobei das Wort (656) mit der digitalen Signatur (624) korrespondiert: und
- Einrichtung zum Zurückgeben des Worts (656) als zumindest ein Anteil der angepassten digitalen Signatur (652);
- Einrichtung zum Vergleichen eines zweiten Anteils der Adressinformation mit der angepassten digitalen Signatur (652); und
- Einrichtung zum Zurückweisen der eingehenden elektronischen Nachricht, wenn der zweite Anteil der Adressinformation und die angepasste digitale Signatur (652) nicht zusammenpassen.

16. Elektronisches Nachrichtensystem (200) nach Anspruch 15, wobei der authentifizierte Nachrichtenserver (212) weiterhin eine Einrichtung zum Parsen einer Senderinformation und einer Empfängerinformation der Adressinformation umfasst, wobei die Empfängerinformation eine Absenderidentifikation (608) umfasst, eine zweite angepasste digitale Signatur (652), und wobei die Senderinformation eine Information betreffend einen entfernten Benutzer (616) umfasst.

17. Elektronisches Nachrichtensystem (200) nach Anspruch 15, wobei die Einrichtung zum Erstellen der digitalen Signatur (624) eine Einrichtung zum Durchführen einer Einweg-Hashfunktion (620) einschließt, wobei die Einweg-Hashfunktion (620) zumindest den Absenderschlüssel (610) und einen Anteil der Adressinformation verwendet, wobei die Einweg-Hashfunktion (620) einen Hashwert erzeugt, und wobei der Hashwert die digitale Signatur (624) darstellt

18. Elektronisches Nachrichtensystem nach Anspruch 15, wobei die Einrichtung zum Erzeugen der angepassten digitalen Signatur (652) weiterhin eine Einrichtung zum Durchführen einer Booleschen Funktion auf der digitalen Signatur (624) umfasst zum Erstellen einer modifizierten digitalen Signatur, und wobei das Wort (656) basierend auf der modifizierten Signatur abgerufen wird.

19. Elektronisches Nachrichtensystem (200) nach Anspruch 15, wobei der authentifizierte Nachrichtenserver (212) weiterhin umfasst:
- Einrichtung zum Erzeugen einer Zahl (660); und
- Einrichtung zum Anhängen der Zahl (660) an das Wort (656), um die angepasste digitale Signatur (652) zu bilden.

## Revendications

1. Procédé pour créer un identifiant d'utilisateur électronique authentifié (644) à usage dans l'authentification de courrier électronique d'un utilisateur distant à un utilisateur local, le procédé comprenant les étapes :
recevoir une demande dudit identifiant d'utilisateur électronique authentifié (644) d'un serveur de messages local (108) ;
récupérer une clé d'expéditeur (610), ladite clé d'expéditeur (610) correspondant à un identifiant d'utilisateur local (608) ;
générer une signature numérique (624) sur la base de ladite clé d'expéditeur (610), ledit identifiant d'utilisateur local (608) et d'informations d'utilisateur distant (616) ;
générer une signature numérique adaptée (652) en transformant ou en mettant en correspondance la signature numérique (624) dans un format acceptable pour transmission dans une adresse électronique de retour ;
concaténer ladite signature numérique adaptée (652) avec au moins un identifiant d'expéditeur correspondant audit identifiant d'utilisateur local (608) ; et
renvoyer un résultat de ladite action de concaténation en tant que dit identifiant d'utilisateur électronique authentifié (644) audit serveur de messages local (108) pour utilisation dans la fourniture d'un message à l'utilisateur distant.

2. Procédé selon la revendication 1, dans lequel ladite action de concaténation comprend la concaténation de ladite signature numérique adaptée (652) avec ledit identifiant d'expéditeur (608) et un nom de domaine (664).

3. Procédé selon la revendication 1, dans lequel ladite action de génération de ladite signature numérique adaptée (652) comprend les étapes :
exécuter une fonction de hachage unidirectionnelle utilisant ladite clé d'expéditeur (610), ledit identifiant d'utilisateur local (608) et lesdites informations d'utilisateur distant (616) en tant qu'entrées pour former une signature numérique (624) ; et
convertir ladite signature numérique (624) d'un premier format numérique en un second format numérique, ladite signature numérique audit second format numérique étant ladite signature numérique adaptée (652).

4. Procédé selon la revendication 1, dans lequel ladite action de génération de ladite signature numérique adaptée (652) comprend les étapes :
exécuter une fonction de cryptage utilisant ladite clé d'expéditeur (610), ledit identifiant d'utilisateur local (608) et lesdites informations d'utilisateur distant (616) pour former une signature numérique (624) ; et
convertir ladite signature numérique (624) d'un premier format numérique en un second format numérique, ladite signature numérique audit second format numérique étant ladite signature numérique adaptée (652).

5. Procédé selon la revendication 1, dans lequel ladite étape de génération de ladite signature numérique adaptée (652) comprend les étapes :
créer une signature numérique (624), ladite signature numérique (624) étant basée sur au moins ladite clé d'expéditeur (610), ledit identifiant d'utilisateur local (608) et des informations d'utilisateur distant (616) ;
récupérer un mot (656) d'une liste de mots (636), ledit mot (656) correspondant à au moins une partie de ladite signature numérique (624) ; et
renvoyer au moins ledit mot (656) en tant que dite signature numérique adaptée (652).

6. Procédé selon la revendication 5, comprenant en outre d'exécuter une opération booléenne (628) sur ladite signature numérique (624) pour créer une signature numérique modifiée, et dans lequel ledit mot (656) est récupéré sur la base de ladite signature numérique modifiée.

7. Procédé selon la revendication 5, comprenant également les étapes :
générer un nombre (660) ; et
ajouter ledit nombre (606) audit mot (656) pour former ladite signature numérique adaptée (652).

8. Procédé pour filtrer du courrier électronique, comprenant les étapes :
créer un identifiant d'utilisateur électronique authentifié (644) selon le procédé de la revendication 1 ;
recevoir un message électronique d'un utilisateur distant, ledit message électronique étant adressé à l'identifiant d'utilisateur électronique authentifié (654) ;
générer une signature numérique adaptée (652) sur la base des informations provenant dudit message électronique, ladite action de génération comprenant les étapes :
exécuter une fonction de hachage unidirectionnelle qui utilise un identifiant d'utilisateur local (608), des informations d'utilisateur distant (616) et une clé d'expéditeur (610) pour former une signature numérique (624), et dans lequel ledit identifiant d'utilisateur local (608) correspond à un identifiant d'expéditeur (608) provenant dudit message électronique ;
transformer ladite signature numérique (624) d'un premier format numérique en un second format numérique ; et
renvoyer ladite signature numérique audit second format numérique en tant que dite signature numérique adaptée (652) ;
comparer ladite signature numérique adaptée (652) à une partie dudit message électronique ;
accepter ledit message électronique si ladite signature numérique adaptée (652) et ladite partie dudit message électronique correspondent ; et
rejeter ledit message électronique si ladite signature numérique adaptée (652) et ladite partie dudit message électronique ne correspondent pas.

9. Procédé selon la revendication 8, dans lequel ledit message électronique est une réponse à un premier message électronique envoyé par un utilisateur local, ledit premier message électronique comprenant ledit identifiant d'expéditeur (608) et ladite signature numérique adaptée (652), et dans lequel ladite partie dudit message électronique comparée à ladite signature numérique adaptée (652) est générée par des actions associées audit utilisateur local.

10. Procédé selon la revendication 8, dans lequel ladite étape de transformation de ladite signature numérique (624) dudit premier format numérique en ledit second format numérique comprend les étapes :
récupérer un mot (656) d'une liste de mots (636), ledit mot (656) correspondant à au moins une partie de ladite signature numérique (624) audit premier format numérique ; et
renvoyer au moins ledit mot (656) en tant que dite signature numérique (624) audit second format numérique.

11. Procédé selon la revendication 10, comprenant en outre d'exécuter une opération booléenne (628) sur ladite signature numérique (624) pour créer une signature numérique modifiée, et dans lequel ledit mot (656) est récupéré sur la base de ladite signature numérique modifiée.

12. Procédé selon la revendication 10, comprenant également les étapes :
générer un nombre (660) ; et
ajouter ledit nombre (660) audit mot (656) pour former ladite première ou ladite seconde signature numérique adaptée (652).

13. Procédé selon la revendication 8, comprenant de plus les étapes :
tester pour déterminer si un utilisateur local (608) correspondant audit message électronique utilise des services de serveur de messages authentifiés ; et
accepter ledit message électronique si ledit utilisateur local (608) n'utilise pas lesdits services de serveur de messages authentifiés.

14. Programme comprenant une ou plusieurs séquences d'instructions agencées pour faire mettre en oeuvre un procédé selon l'une quelconque des revendications précédentes à un ou plusieurs processeurs.

15. Système de messagerie électronique (200) comprenant :
un serveur de messages authentifiés (212), ledit serveur de messages authentifiés (212) étant agencé pour filtrer un message électronique entrant si l'identifiant d'utilisateur électronique authentifié (644) ne peut pas être vérifié, ledit message électronique entrant incluant des informations d'adresse ; et
un hôte de courrier (212) couplé audit serveur de messages authentifiés (212) ;
dans lequel ledit serveur de messages authentifiés (212) comprend :
des moyens pour générer une signature numérique adaptée (652), lesdits moyens de génération comprenant :
des moyens pour créer une signature numérique (624) sur la base d'au moins une clé d'expéditeur (610) et une première partie desdites informations d'adresse ;
des moyens pour récupérer un mot (656) d'une liste de mots (636), ledit mot (656) correspondant à ladite signature numérique (624) ; et
des moyens pour renvoyer ledit mot (656) sous la forme d'au moins une partie de ladite signature numérique adaptée (652) ;
des moyens pour comparer une seconde partie des informations d'adresse à ladite signature numérique adaptée (652) ; et
des moyens pour rejeter ledit message électronique entrant si ladite seconde partie desdites informations d'adresse et ladite signature numérique adaptée (652) ne correspondent pas.

16. Système de messagerie électronique (200) selon la revendication 15, dans lequel ledit serveur de messages authentifiés (212) comprend en outre des moyens pour analyser des informations d'émetteur et des informations de récepteur provenant desdites informations d'adresse, lesdites informations de récepteur incluant un identifiant d'expéditeur (608), une seconde signature numérique adaptée (652), et lesdites informations d'émetteur incluant des informations d'utilisateur distant (616).

17. Système de messagerie électronique (200) selon la revendication 15, dans lequel lesdits moyens pour créer ladite signature numérique (624) incluent des moyens pour exécuter une fonction de hachage unidirectionnelle (620), ladite fonction de hachage unidirectionnelle (620) utilisant au moins ladite clé d'expéditeur (610) et une partie desdites informations d'adresse, ladite fonction de hachage unidirectionnelle (620) générant une valeur de hachage, et ladite valeur de hachage étant ladite signature numérique (624).

18. Système de messagerie électronique selon la revendication 15, dans lequel lesdits moyens pour générer ladite signature numérique adaptée (652) comprennent en outre des moyens pour exécuter une fonction booléenne (628) sur ladite signature numérique (624) pour créer une signature numérique modifiée, et dans lequel ledit mot (656) est récupéré sur la base de ladite signature numérique modifiée.

19. Système de messagerie électronique (200) selon la revendication 15, dans lequel ledit serveur de messages authentifiés (212) comprend également :
des moyens pour générer un nombre (660) ; et
des moyens pour ajouter ledit nombre (660) audit mot (656) pour former ladite signature numérique adaptée (652).
